# EUROPEAN PATENT SPECIFICATION

(11) **EP 3 718 399 B1**
(45) Date of publication and mention of the grant of the patent: **12.05.2021**
(21) Application number: 18852715.4
(22) Date of filing: 21.11.2018
(51) Int. Cl.: A01K 61/00

(54) **METHOD FOR CULTIVATING PARALARVAE OF THE COMMON OCTOPUS (OCTOPUS VULGARIS)**
VERFAHREN ZUR ZÜCHTUNG VON PARALARVEN DER GEWÖHNLICHEN KRAKE (OCTOPUS VULGARIS)
PROCÉDÉ DE CULTURE DE PARALARVES DE PIEUVRE COMMUNE (OCTOPUS VULGARIS)

(30) Priority: 29.11.2017 ES 201731369
(43) Date of publication of application: 07.10.2020
(73) Proprietor: Instituto Español de Oceanografia (IEO), 28002 Madrid (ES)
(72) Inventor: TUR ESTRADA, Ricardo, 28002 Madrid (ES); RODRIGUES DOS SANTOS DOMINGUEZ, Pedro Miguel, 28002 Madrid (ES); ALMANSA BERRO, Eduardo, 28002 MAdrid (ES); LAGO ROUCO, Maria Jesus, 28002 Madrid (ES); GARCIA FERNANDEZ, Pablo, 28002 Madrid (ES); PEREZ RIAL, Evaristo, 28002 Madrid (ES)
(74) Representative: Clarke Modet & Co.
(86) International application number: PCT/ES2018/070749
(87) International publication number: WO 2019/106212

(56) References cited:
- IGLESIAS ET AL: "Rearing of Octopus vulgaris paralarvae: Present status, bottlenecks and trends", AQUACULTURE, ELSEVIER, AMSTERDAM, NL, vol. 266, no. 1-4, 24 April 2007 (2007-04-24), pages 1-15, XP022043601, ISSN: 0044-8486, DOI: 10.1016/J.AQUACULTURE.2007.02.019
- ELENA BAEZA-ROJANO ET AL: "Marine gammarids (Crustacea: Amphipoda): a new live prey to culture Octopus maya hatchlings", AQUACULTURE RESEARCH, vol. 44, no. 10, 29 April 2012 (2012-04-29), pages 1602-1612, XP055578554, GB ISSN: 1355-557X, DOI: 10.1111/j.1365-2109.2012.03169.x
- ELENA BAEZA-ROJANO ET AL: "Use of Amphipods as alternative prey to culture cuttlefish (Sepia officinalis) hatchlings", AQUACULTURE, vol. 300, no. 1-4, 1 February 2010 (2010-02-01), pages 243-246, XP055578623, Amsterdam, NL ISSN: 0044-8486, DOI: 10.1016/j.aquaculture.2009.12.029
- SHIGENOBU OKUMURA ET AL: "Improved survival and growth in Octopus vulgaris paralarvae by feeding large type Artemia and Pacific sandeel, Ammodytes personatus", AQUACULTURE, vol. 244, no. 1-4, 1 February 2005 (2005-02-01), pages 147-157, XP055578519, Amsterdam, NL ISSN: 0044-8486, DOI: 10.1016/j.aquaculture.2004.11.044
- ROGER VILLANUEVA: "Experimental rearing and growth of planktonic Octopus vulgaris from hatching to settlement.", CANADIAN JOURNAL OF FISHERIES AND AQUATIC SCIENCES, vol. 52, no. 12, 1 January 1995 (1995-01-01), pages 2639-2650, XP055578522,

## Description

The present invention relates to a method for cultivating larvae of the common octopus (*Octopus vulgaris*)*.* In particular, it relates to a cultivation protocol which allows the settlement phase of the paralarvae of this species. The present invention therefore belongs to the sector of aquaculture.

### BACKGROUND OF THE INVENTION

The common octopus (*Octopus vulgaris*) is a specie with strong potential for diversification in aquaculture due to its rapid growth, high fertility, easy adaptation to captivity, high market price and high demand. The industrial fattening of the octopus started in 1996 in Galicia, in the northwest of Spain. This interest emerges from results obtained by researchers at the Spanish Institute of Oceanography, (Iglesias, J. and Fuentes, L. (2014) "Octopus vulgaris paralarval culture," in Cephalopod Culture, eds J. Iglesias, L. Fuentes, and R. Villanueva (New York, NY; Heidelberg; Dordrecht; London: Springer), 427-450.), in pilot testing during which it was proven that 750 g juveniles reached the commercial size (of 2.5 to 3 kgs) in just 4 months. Following the advances marked by these initial results, in 1997, a production of 12 metric tons (t) was obtained, located mainly in the Galician Rías Bajas (García-García, J. et al (2004) Cost analysis of octopus ongrowing installation in Galicia. Spanish Journal of Agricultural Research, 2: 531-537).

However, the potential of this type of production is very limited, due to the fact that the supply of individuals for fattening is wholly dependent on the juveniles captured in the natural environment. Due to these reasons, this type of production was reduced to just 4.5 t in 2012 and without any meaningful data at present. Another aspect limiting this production is the lack of an artificial diet for adults, currently dependent on frozen prey with low commercial value (e.g. crustaceans, fish, etc.). However, recent studies in this field are improving the results obtained with artificial diets (Cerezo Valverde, J., & Garcia, B. G. (2017) High feeding and growth rates in common octopus (Octopus vulgaris) fed formulated feeds with an improved amino acid profile and mixture of binders. Aquaculture Research, 48(7), 3308-3319). The solution to all these problems lies in the production of juveniles by means of cultivation techniques, instead of capturing them from the natural environment. However, the high mortality (practically 100%) in the first days of life prevents the production of juveniles at a commercial level (Iglesias and Fuentes, 2014).

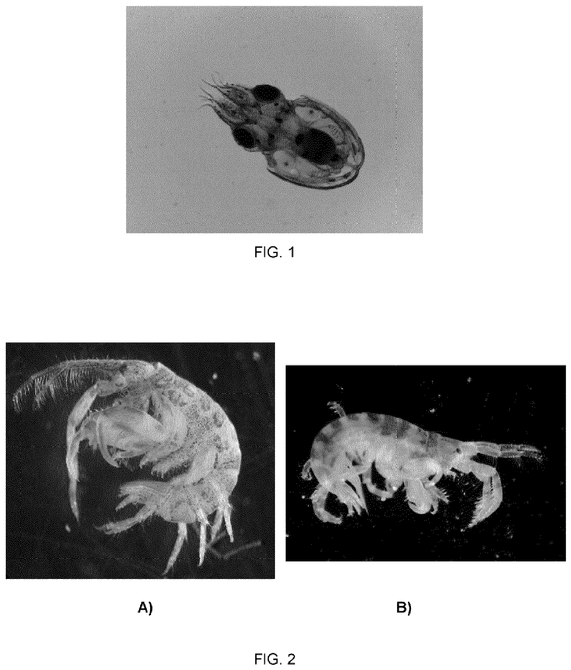

Due to the foregoing, the viability of the aquaculture of the octopus at a commercial level depends mainly on increasing the survival of the individuals during the life phase known as paralarva. This phase is characterized by the individuals living in the water column (they are planktonic). The duration of this phase depends largely on the temperature and diet, possibly lasting 65-70 days at 20°C (Iglesias and Fuentes, 2014). Initially, these individuals have a characteristic physiognomy (Figure 1), weighing between 0.20 to 0.30 mg dry weight and exhibiting 3 suckers on each arm. When the octopuses exceed 9 mg dry weight and exhibit 18 to 20 suckers, they adopt the typical shape of a small adult octopus and emigrate to the bottom (they become benthic), entering the juvenile phase. Having reached this point, it is important to clarify that a part of the bibliography on common octopus culture has been produced in Japan (Okumura, S., et al. (2005) Improved survival and growth in Octopus vulgaris paralarvae by feeding large type Artemia sp. and Pacific sandeel, Ammodytes personatus. Aquaculture 244, 147-157). However, recently, it has been shown that the Japanese population is a different species, now called *Octopus sinensis* (Amor, M. D. et al. (2017). Morphological assessment of the Octopus vulgaris species complex evaluated in light of molecular-based phylogenetic inferences. Zoologica Scripta, 46(3), 275-288), therefore any comparison must be made with the care since the results have been different and hardly reproducible in the European population (Iglesias and Fuentes, 2014.

Non patent document XP022043601 (IGLESIAS ET AL: "Rearing of Octopus vulgaris paralarvae: Present status, bottlenecks and trends", AQUACULTURE, ELSEVIER, AMSTERDAM, NL, vol. 266, no. 1-4, 24 April 2007, pages 1-15; ISSN: 0044-8486) discloses a method for cultivating paralarvae of the common octopus, *Octopus vulgaris,* placed in a culture tank containing water, comprising the addition of prey to said culture tank.

The mortality in the paralarva phase seems to be related to zootechnical and/or nutritional aspects. In the first phases of life, the best results have been obtained with live prey, the best accepted to date being the larvae (zoeas) of decapod crustaceans and especially crab *Maja* sp). The first time the O. *vulgaris* cycle was successfully closed under captive conditions was in 2001, using *crab* zoeas as prey, but in this test only two octopuses reached adult age. Other authors have obtained similar results, but without ever exceeding 5% survival in settling (Iglesias and Fuentes, 2014). It should also be added that these experiences have not been reproducible, as the subsequent results have indicated significant variability (Garrido, D., *et al.* (2016). Meta-analysis approach to the effects of live prey on the growth of *Octopus vulgaris* paralarvae under culture conditions. Reviews in Aquaculture doi:10.1111/raq.12142). It should be added to the above that in all tests, crustacean zoeas, such as crab have been used which are not viable on a commercial scale given the cost and difficulty in obtaining them on a large scale.

To date, the only commercially viable prey is *Artemia* sp. a small crustacean easy to obtain and very useful in aquaculture for feeding to the fish larvae. However, the tests carried out with this *Artemia sp.* have not achieved the growth nor the survival required to achieve the settlement of the paralarvae, in spite of the numerous attempts at enriching their nutritional profile. Another alternative to the use of these prey has been to design artificial inert microdiets (0.5 to 2 mm in diameter) with a nutritional profile suitable for the development of the larva. Different studies have attempted this route but to date, no significant improvements have been observed in the survival and growth, possibly due to a summation of causes such as low acceptance, low buoyancy or lack of suitable nutritional profile. Recently, a patent has been applied for (ES 2 599 603) proposing a new type of inert diet, improving previous results. However, the results obtained by this diet (2.5 mg dry weight at 73 days) are still far from the 9.5 mg dry weight at 45 days obtained in the previous studies with crab zoea. Due to the foregoing, alternative prey must be identified which can be produced in captivity at a reasonable cost or which are abundant and easy to obtain in the natural environment.

Lastly, another essential aspect is the need to have a method or protocol for standardized cultivation that has demonstrated effectiveness. In this respect, there are numerous studies as shown in the review indicated above by Iglesias and Fuentes (2014), although the results are still insufficient. In this regard, recent studies (Garrido, D., et al. (2017). Assessment of stress and nutritional biomarkers in cultured Octopus vulgaris paralarvae: effects of geographical origin and dietary regime. Aquaculture, 468, 558-568) proposed a standardized protocol comparing their results in different octopus populations (Atlantic and Mediterranean). This protocol has served as a basis for different tests carried out as part of the OCTOWELF project AGL2013-49101-C2-1-R. MINECO. Spanish government).

The invention presented below makes use of a new prey which is easy to collect from the natural environment due to its abundance in determined marine niches and also achieves greater paralarvae growth values than those of *Artemia* sp., and close to those obtained with zoeas of decapod crustaceans, allowing their settlement to exceed 9 mg dry weight at 65 to 75 days old. An improved cultivation protocol is also proposed based on the previous studies which has enabled significant increases in the survival of paralarvae throughout the entire planktonic period up to the time of settlement.

### DESCRIPTION OF THE INVENTION

The method for larval cultivation of the common octopus, *Octopus vulgaris* of the present invention has allowed a significant improvement to be obtained in the viability of the first life phases of the octopus (called paralarva), overcoming the obstacle which has up to now been the survival of the paralarvae for the commercial cultivation of this species.

The inventors have found that using novel cultivation parameters and especially new prey (food), has allowed high rates of survival and growth to be obtained in octopus paralarvae with respect to the previous cultivations of this species.

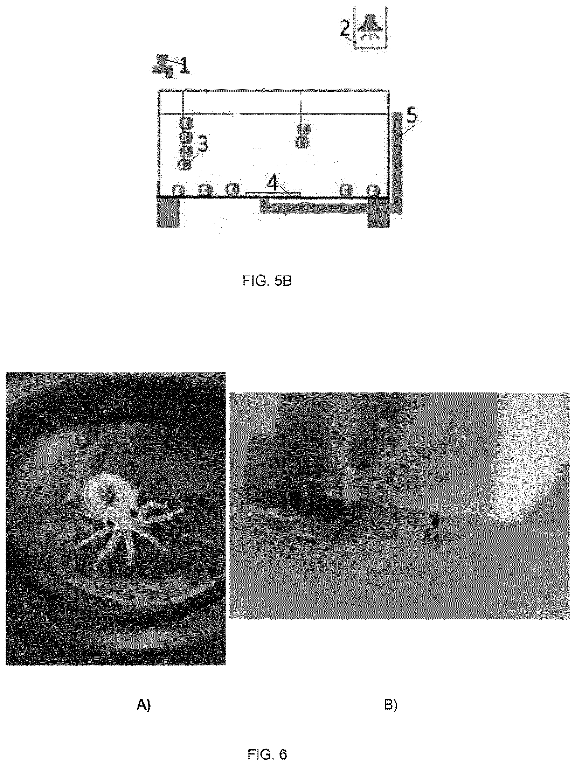

The term paralarva in the present invention relates to the state of development of the common octopus, *Octopus vulgaris* from the time when it has abandoned the coverings of the egg (hatching) to its complete settlement on the bottom of the sea or tank (benthic phase). The larval period cannot be mentioned since they do not undergo a metamorphosis per se, therefore the term paralarva is used to distinguish it from the juvenile-adult phase. The paralarva lives in the water column, therefore it is also called "planktonic phase". The duration of this phase depends largely on the culture conditions (temperature of the water, light, culture volume, etc.) and the diet. For example, it can be said that at 20°C and a suitable diet, the duration of this phase is from 65 to 75 days (Iglesias and Fuentes, 2014). Initially, these individuals have a characteristic physiognomy (Figure 1), weighing between 0.2 to 0.3 mg (dry weight). When the octopuses exceed 9 mg dry weight, it is considered that they have reached the settlement phase (normally this occurs at between 65 and 75 days old). At this time, they start to acquire the typical shape of a small adult octopus (Figure 6) and migrate to the bottom (they become benthic). From this time, they mainly eat at the bottom of the tank (and not in the water column) and they tend to seek refuge (some type of opacity), exhibiting preference for the areas with little light.

Prior to settlement, there is an intermediate phase that we can call pre-settlement which starts when the paralarva has a dry weight of between 6 and 9 mg which usually occurs from 50 to 70 days old and lasts until the time of settlement. This pre-settlement phase is characterized by the paralarva starting to migrate to the bottom without settling completely and culminates when the settlement phase has been reached.

Once settled, the juvenile (benthic) phase starts. In this phase, the individuals start to be fed on crustaceans such as small crabs and shrimp (around 1 cm in length) and they can also start to be fed with an inert diet based on these same frozen crustaceans or some type of specific feed for cephalopods (Iglesias and Fuentes, 2014). However, the present invention relates to the method of cultivation up to the settlement of the paralarvae. For the present invention, in particular, gammarideas of the type *Jassa.* spp., preferably *Jassa falcata* and Jassa *marmorata,* and two types of caprelids: *Phtisica* spp. and *Caprella* spp., preferably *Phtisica marina* and *Caprella equilibra* have been identified as new prey for the cultivation of octopus paralarvae.

Both the gammarideas and caprelids belong to the group of amphipods. The present invention therefore relates to a method for cultivating paralarvae of the common octopus, *Octopus vulgaris* located in a culture tank containing water, said method characterized in that it comprises adding prey selected from:
- gammarideas of the type *Jassa.* spp.,
- caprelids of the type *Phtisica* spp. *and*/*or Caprella* spp. or
- combinations of these
   to said culture tank.

The gammarideas of the type *Jassa.* spp., are preferably selected from *Jassa falcata* and *Jassa marmorata.*

The caprelids of the type *Phtisica spp.* are preferably selected from *Phtisica marina* and the caprelids of the type *Caprella spp.* are *Caprella equilibra.*

This prey can be added as the only food or in combination with *Artemia* sp. or other crustacean zoeas (for example when the number of prey obtained is not sufficient or, when they are born, the paralarvae are not of a size that allows them to capture and ingest the prey). In the case of both prey, the most common densities described in the prior art can be used and they can fluctuate between 0.1 and 1 individuals/ml (preferably around 0.5 individuals/ml). As indicated in the prior art, it is suitable give the prey in various doses, preferably between 3 and 5 doses per day.

In the case of adding combinations (mixture) of gammarideas of the type *Jassa* spp. and caprelids of the type *Phtisica* spp. *and*/*or Caprella* spp., between 1 and 10% of the total number of prey is preferably administered in the form of caprelids of the type *Phtisica* spp. *and*/*or Caprella* spp and between 90 and 99% of gammarideas of the type *Jassa* spp. More preferably, 5% of caprelids of the types *Phtisica* spp. *and*/*or Caprella* spp. and 95% of gammarideas of the type *Jassa* spp. are administered.

In a preferred embodiment, the gammarideas are added from a day between 1 and 10 days of life of the paralarva up to settlement of the same, while the caprelids are added from between 20 and 30 days of life and up to settlement of the same.

When the gammarideas are administered together with the caprelids, the proportions used of one and the other are preferably those indicated above. The start of feeding with gammarideas of the type *Jassa* spp. can be varied between day 1 (day of hatching from the egg) and 10 days old as mentioned. This start of feeding can vary between said days of life, taking into account the size of the paralarvae when they are born and their ability to attack and ingest prey, something which the person skilled in the art can easily see by means of observing the behavior of the paralarvae.

In another preferred embodiment of the invention, the gammarideas of the type *Jassa* spp. are administered from the first day of life of the paralarvae and up to their settlement and the caprelids of the types *Phtisica* spp. *and*/*or Caprella* spp. start to be administered from day 10 of life up to their settlement. Preferably, the proportion of the gammarideas of the type *Jassa* spp. and the caprelids of the type *Phtisica* spp. *and*/*or Caprella* spp. when they are administered together is previously indicated.

In another preferred embodiment of the invention, both the gammarideas of the type *Jassa* spp. and caprelids of the types *Phtisica* spp. *and*/*or Caprella* spp. are administered from day 30 of life of the paralarvae and up to their settlement. Preferably, the proportion of the gammarideas of the type *Jassa* spp. and the caprelids of the types *Phtisica* spp. *and*/*or Caprella* spp. when they are administered together is previously indicated.

In a preferred embodiment, the density of paralarvae in the culture tank is between 3 and 7 paralarvae/liter with the aim of optimizing the total number of prey with a good ratio of prey:paralarvae and avoiding stress on the individuals. In the case of the settlement tanks (see details below), the density of individuals will reduce, a density of 0.1 and 0.5 paralarvae per liter being preferable.

In a preferred embodiment, a total of 3 to 5 individuals of these prey (whether they are gammarideas of the type *Jassa* spp., caprelids of the types *Phtisica* spp. *and*/*or Caprella* spp. or combinations of these) per paralarvae/day are added to the culture tank, distributing the doses such that there is always prey available in the tank. To achieve this, the first dose is adjusted, estimating the number of prey remaining in the tank from the previous day, the total number of doses per day fluctuating between 1 and 4 preferably. By way of example, if there are 300 paralarvae in the tank, the number of prey to be added per day would be 900 (300x3) in the case of 3 prey per paralarva/day being added. These 900 prey would be added, distributed between 1 to 4 doses preferably.

The size of the prey supplied will preferably vary as a function of the size/age of the paralarvae. In a preferred embodiment, in a first phase, from day 1 of life to 20 to 30 days old, gammarideas of the type *Jassa* spp. between 1 and 4 mm in total length (distance between the telson and the middle of the eyes) are added. From this point (20 to 30 days old) and up to 50 to 70 days, gammarideas of between 2 and 8 mm in length are added and caprelids of the types *Phtisica* spp. *and*/*or Caprella* spp. between 4 and 30 mm in length. Lastly, between 50 and 70 days of life and up to settlement, the diet is again restricted to gammarideas with a size of between 1 and 4 mm in total length. This last change is due to observations made in paralarvae recently settled, which apparently become more vulnerable during the settlement period, possibly being attacked at the bottom of the tank by the larger gammarideas.

In a preferred embodiment, the culture tanks used between the first day of life and the pre-settlement phase (between 6 to 9 mg dry weight and 50 and 70 days of life) are preferably a truncated cone shape and black with a volume which can be preferably between 100 and 1000 I. In a more preferred embodiment, the paralarvae that reach 6 mg dry weight (usually occurring between 50 and 70 days) will be transferred individually to another culture tank (called settlement tank below). This settlement tank will have a flat bottom and preferably will be transparent (e.g. gray) and rectangular or square, more preferably it will have between a 200 and 400 liter volume, a height of between 40 and 60 cm and will be partially covered with a mesh or canvas. These settlement tanks will be prepared beforehand, filled with water from the original tank (matured water) and will preferably include refuges (e.g. PVC tubes of 1 to 2 cm in diameter) and small stones to enrich the habitat. All of this will allow the stress associated with the tank change to be minimized.

Another important aspect in the protocol of this invention is that the bottom of the tanks is maintained without siphoning (that is to say, without sucking the leftover food and larvae which may be at the bottom) for the entire cultivation of the paralarvae. In this manner, the surviving prey are left to colonize and keep it clean since, being detritivores, they consume the organic material deposited on the bottom, preventing the proliferation of pathogens. This in turn improves the well-being of the paralarvae since the possible stress caused by the siphoning process is eliminated.

In a preferred embodiment of the method of the invention, during the cultivation of the paralarvae, the tank is artificially illuminate by means of a lamp or light placed on the edge of the tank (instead of a central position), causing a change in the light incidence angle on the surface and producing heterogeneous light conditions inside the water column, due to the changes in the reflection and refraction of the light. A fluorescent lamp (cold white) is preferably used.

The intensity levels of the light supplied will preferably vary between 40 and 800 lux (69 to 1436 W/m²). More preferably, the levels used are from 600 to 800 lux (1077 to 1436 W/m²) for the first 10 to 15 days of life of the paralarvae and between 300 and 600 lux (517 to 1077 W/m²) from 10 to 15 days of life. When the first paralarvae in pre-settlement (between 6 to 9 mg and at 50 to 70 days of life) are observed, the light is reduced to a range of between 40 and 300 lux (69 to 517 W/m²) and is maintained like this until all the paralarvae have settled or have been transferred to the settlement tank.

Once the paralarvae have been transferred to the settlement tanks, the same position of the lamp and the last intensity used in the truncated cone-shaped tanks (40 to 300 lux, i.e. 69 to 517 W/m²) will be maintained. The photoperiod during the entire development of the paralarvae (from the first day of life) to the settlement will be between 10 and 14 hours of light, preferably 8:00 a 22:00h.

With respect to the rest of the conditions of the culture water, the renewal percentage and the use of green water also represents an important aspect. In both cases, there may be numerous variants in the protocols in the bibliography, but there are no tests that allow differences between one and others to be seen. Due to the foregoing, a protocol is proposed in the present invention which varies both aspects (renewal and green water) as a function of the development of the paralarvae.

Preferably no renewal of the water of any kind is carried out in the tanks during the two first days. Renewal preferably starts at a preferred flowrate which renews between 4 and 10% of the total volume of the tank each hour such that 20% is renewed daily up to the 5 days of life of the paralarvae and from there it increases up to 100% daily at 10 to 15 days. This renewal is maintained at 100% until 30 days and from there, the renewal is left open permanently (24 hours) which represents a daily renewal of 200% approximately. This renewal percentage is maintained until the paralarvae are settled or are transferred to settlement tanks (when between 6 and 9 mg dry weight is reached and around 50 to 70 days of life). This renewal percentage (around 200% per day) is maintained uniformly in the settlement tanks.

The start of the renewal will preferably be at midday (around 12:00) after the routine maintenance work (measuring oxygen, temperature, etc.) and the first food doses, unless there is a fall in oxygen (below 5.8 mg/l), in which case the flow is opened as soon as possible and the estimated time is maintained, possibly being extended if the oxygen levels do not exceed 5.8 mg/l).

The recirculation of the water in the culture tank can be carried out by means of a system which can function both in a closed circuit (by means of recirculation of the water) and in an open circuit. In this last case, a filtration system will be used which prevents the inlet of sediment or any living organism, especially those which could potentially be pathogens. The output of the water from the tank is carried out by means of an outlet filter preferably a tube in a central position and with a mesh opening of between 300 to 400 microns, preferably 300 microns.

The method, in turn and preferably, makes use of the technique of green water, a technique consisting of the addition of a mixture of microalgae (phytoplankton), preferably *Isochrysis* spp and *Nannochloropsis* spp.

The addition of microalgae is preferably carried out once daily (from the first day of life of the paralarvae), if required, and the quantity added is the quantity required to obtain a concentration of between 0.7 and 1.5 x 10⁶cls/mL, 1 x 10⁶cls/mL being preferred. The addition of algae is preferably carried out at the same time each day (once the renewal has completed) and only if it is required to reach the concentration level of the algae previously mentioned. From 30 days, the addition of microalgae is stopped and it is also not added to the settlement tank.

In a preferred embodiment, the oxygen concentration in the culture water is always maintained above 5.5 mg/l (and preferably above 6 mg/l). At most, up to 100% saturation can be reached by means of an aerator with moderate flow, since otherwise, there is a risk of anoxia and large scale mortality of the paralarvae.

In another preferred embodiment, the salinity of the water will be that of the natural water from the sea (around 35 to 36 g/l), preventing abrupt drops which could cause large scale mortalities.

In another preferred embodiment, the temperature of the culture water is always maintained between 18 and 22°C.

In order to determine the dry weight of the paralarvae used as reference for the different cultivation phases, a sample of paralarvae is taken from the tank (preferably between 10 and 30 paralarvae) which are anesthetized (Cl₂Mg 1.5% in seawater) and sacrificed (Cl₂Mg 3.5% in seawater), following the indications of Fiorito et al., (2015). Guidelines for the Care and Welfare of Cephalopods in Research-A consensus based on an initiative by CephRes, FELASA and the Boyd Group. Laboratory animals, 49(2_suppl), 1-90. These larvae are dehydrated in an oven (100°C for 20 h) and weighed on a precision scales.

The cultivation method or protocol of the present invention is advantageous with respect to the protocols already known. In relation to the prey used, its notable advantage over other previous prey (e.g. crab zoea) is that they are very easy to obtain since they are produced naturally and on a large scale on rafts, shellfish farms and mussel purifiers of the Galician rivers (Camacho, A. P., Gonzalez, R., & Fuentes, J. (1991). Mussel culture in Galicia (NW Spain). Aquaculture, 94(2-3), 263-278). In addition, it concerns a specie that is geographically widely distributed and with variations in seasonal abundance whose maximum peak coincides with the natural hatching period of the octopus, up to 30 individuals per cm³ having listed in the Mediterranean (Scinto, A., Benvenuto, C., Cerrano, C., & Mori, M. (2007). Seasonal cycle of Jassa marmorata Holmes, 1903 (Amphipoda) in the Ligurian Sea (Mediterranean, Italy). Journal of Crustacean Biology, 27(2), 212-216).

Both groups of amphipods (gammarideas and caprelids) were obtained with ease from the lines used in the mussel culture rafts situated in the Galician rivers. The gammarideas in turn can also be obtained in the outlet channels of the shellfish farms to maintain crustaceans and mussel purifiers. In order to obtain these amphipods, it is sufficient to submerge the lines or masses of mussels in a tank with water (25 to 30 I) and stir them gently, which causes the majority to separate from them and move to the walls of the tank. These tanks will be transported to the culture installations, preferably using a small aerator to avoid drops in oxygens.

Once in the culture installations, the amphipods exhibit easy adaptation to captivity and do not need any special maintenance conditions. They are preferably kept in culture tanks similar to the settlement tanks, although without being covered and with greater renewal (10 to 12 renewals per day). They are fed fish feed or fish meat or mollusks supplied *ad libitum,* avoiding too many leftovers being left unconsumed on the bottom.

The collection of the prey from the prey storage tank is carried out using different methods. The first is by means of siphoning the walls and bottom of the prey storage tank. The amphipods are concentrated in a net whose gap can vary according to the size of the prey that is sought. This system is preferably used for larger prey. The second collection system consists of a concentrator which uses the outlet tube of the water from the culture tank. A net is placed on the walls of this tube which allows prey to enter (and whose net gap can vary according to the size of the prey desired) and a smaller net (preferably 200 microns) is placed on the bottom (outlet) of the tube which keeps them inside the tube. Once the prey are in the interior part of the tube, this is removed and the prey are transferred to a recipient to add them to the paralarvae tank. In both cases (siphon and concentrator), an attempt is made to avoid the prey entering into contact with the air since this can cause them to accumulate air bubbles in their exoskeleton which would prevent them being able to submerge, making them difficult to capture for the paralarvae.

The method of the present invention has obtained survival data of > 90% at 40 days old, > 80% at 50 days and > 65% at 60 days old. These results are better, even than the best results obtained up to now with crab and therefore better than those obtained with *Artemia* sp. (the only commercially-viable diet), whose paralarvae rarely exceed 30 days old. In relation to the growth, the proposed protocol of the invention obtains increases in weight of between 5 and 6% of their dry weight per day. These values are below the 7 to 8% obtained by the previous authors with crab zoea, but greater than many of those obtained with *Artemia* sp. (3 to 4% in the majority of cases) and the studies confirm that they are sufficient for achieving settlement, although with a delay of 10 to 20 days with respect to the feeding with crab zoea). In spite of this difference, the ease of obtaining the proposed prey (amphipods) with respect to the difficulty of obtaining crab zoeas, gives the amphipods a clear advantage in advancing their cultivation on a commercial scale.

The high natural availability of the prey used in the method of the present invention would allow industrial production (at least at a small or medium scale). There is also the possibility of carrying out multi-trophic production associated with the rafts and shellfish farms (a combination cultivation of different species where the surpluses or waste of one species is utilized to feed another species, reducing the impact and increasing profitability).

Throughout the description and the claims, the word "comprises" and its variants do not intend to exclude other technical characteristics, additions, components or steps. For the expert skilled in the art, other objects, advantages and characteristics of the invention will emerge in part from the description and in part from the practice of the invention. The following examples and figures are provided by way of illustration and do not intend to be limiting to the present invention.

### BRIEF DESCRIPTION OF THE FIGURES

**Fig. 1****:** shows a photo of a paralarva recently hatched from a common octopus, *O. vulgaris,* where its characteristic physiognomy can be seen.
**Fig. 2****:** shows photos of exemplary adults *Jassa falcata* (A) and *Jassa marmorata* (B).
**Fig. 3****:** shows photos of exemplary adults *Phtisica marina,* male and female (A) and *Caprella equilibra,* male and female (B).
**Fig. 4****:** graphics showing the growth in mg dry weight of paralarvae of octopus in different experiments: 4A: a control group with paralarvae fed exclusively with *Artemia sp.* up to 40 days of life and an experimental group fed with *Artemia sp.* and zoea up to day 30 and subsequently with amphipods exclusively from day 31 to 50. The bars indicate the standard deviation. 4B: Paralarvae fed up to day 25 with a control treatment (*Artemia sp.*) and an experimental treatment with *Artemia sp.* up to 8 days and amphipods from 9 to 25 days old.

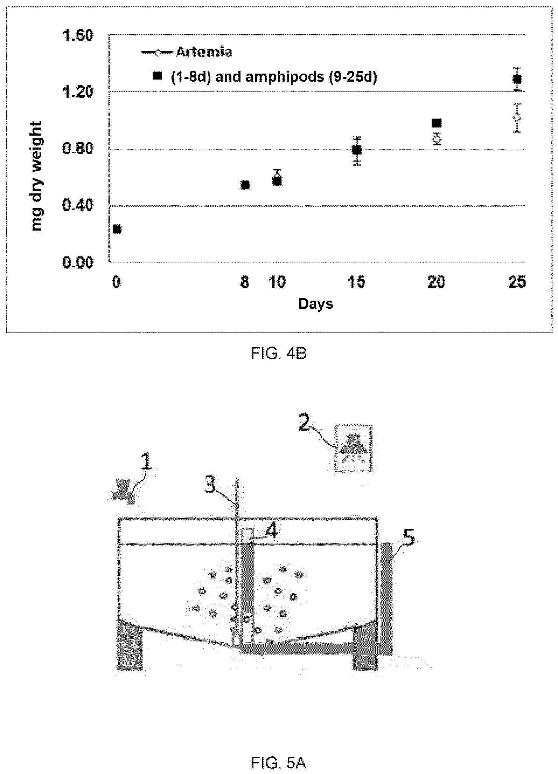

**Fig. 5****:** diagram showing the culture tanks used in the invention. 5A: truncated cone-shaped tank used from the first day until the larvae enter the settlement pages (6 to 9 mg dry weight which usually occurs between 50 and 70 days of life). In the diagram is represented the water inlet (1) and light source (2), the central aeration (3), the central tube (4) provided with a filter and the exterior drain allowing the water height (5) to be regulated. 5B: Settlement tank where the larvae are transferred until reaching the settlement phase (above 9 mg dry weight). In the diagram is represented the water inlet (1) and light source (2), the refuges, both hanging and deposited on the bottom (3), the central tube provided with a filter (4) and exterior drain allowing the water height (5) to be regulated.
**Fig. 6****:** Paralarvae in settlement phase. PVC tubes used as refuges are also observed in B).

### EXAMPLES

The invention is illustrated by means of tests carried out by the inventors which reveal the effectiveness of the product of the invention.

### Example 1: Octopus larval culture test known in the prior art (Garrido, D. et al. (2017). Aguaculture, 468, 558-568):

Experiment carried out in truncated cone-shaped tanks of 500 I volume, black walls and bottom, gentle to moderate aeration in a central position. Use of green water (phytoplankton) and a renewal of 150% per day during the entire experiment (30 days) with water filtered at 2 micron by means of cartridge filters. In terms of the light, a 36 W cold white fluorescent light is used, situated in the central upper part of the tank. A single intensity of 700 lux was used during the entire experiment. The food was based on *Artemia sp.* enriched with microalgae with respect to another enriched with a marine phospholipid. The *Artemia sp.* was supplied in 3 separate doses throughout the day. The survival at 30 days old was between 0.14 to 3.77%, while the growth rate showed an increase in dry weight of between 3.9 and 6.4% per day.

### Example 2: Control test: common octopus larval culture (1000 I tank) using Artemia sp. exclusively as prey from day 1 to day 40 of life of the paralarvae.

Experiment carried out in a 1000 I volume truncated cone-shaped tank, black walls and bottom, aeration in a central position and moderate, preventing the current created by the air bubbles impeding the paralarvae from moving freely through the tank (Figure 5A). A density of 5 paralarvae/liter and values for the dissolved oxygen oscillated between 5.5 and 6.7 mg/l for a temperature range of 18.5 to 21.3°C and a salinity of 35 g/l (for the entire experimental period). Green water was used up to 30 days, with a concentration of 10⁶ cls/mL of *Nannochloropsis sp.* and *Isochrysis aff. galbana* at the time of adding the microalgae. This method was the same as in the previous test (test of the prior art), but the modifications in the renewal in this second test affected its concentration. These differences consisted in maintaining the tank closed for the two first days, with "maturation" of the tank taking place (1^{st} difference with the method of the prior art). Following this period, renewal starts (with water filtered at 1 micron with cartridge filters), starting with a renewal rate of 15 to 20% of the volume of the tank (10 ml/s for 5 hours) for the following 5 days, increasing the time gradually up to 100% renewal at 15 days. This percentage is maintained like this until day 30, from which continuous renewal (24 hours per day) is carried out which represents a renewal of around 200% per day and which is maintained until the tank is closed at 40 days of life (2^{nd} difference). The outlet of the water was carried out by way of a central tube with a net of 300 microns and the level of the water is maintained owing to an exterior tube.

In terms of the light, a 35 W cold white fluorescent light was used over the edge of the tank (instead of a central position), causing a change in the light incidence angle over the surface and producing heterogeneous light conditions inside the water column (3^{rd} difference). The intensity values used during the test remained within three intensity levels. The levels used go from 600 to 800 lux (1077 to 1436 W/m²) for the first 15 days of life and between 300 and 600 lux (517 to 1077 W/m²) for the period between 15 and 40 days of life (4^{th} difference). There was a photoperiod of 14:10 (light:darkness) between las 8:00 and 22:00 from the first day of life to the end of the test.

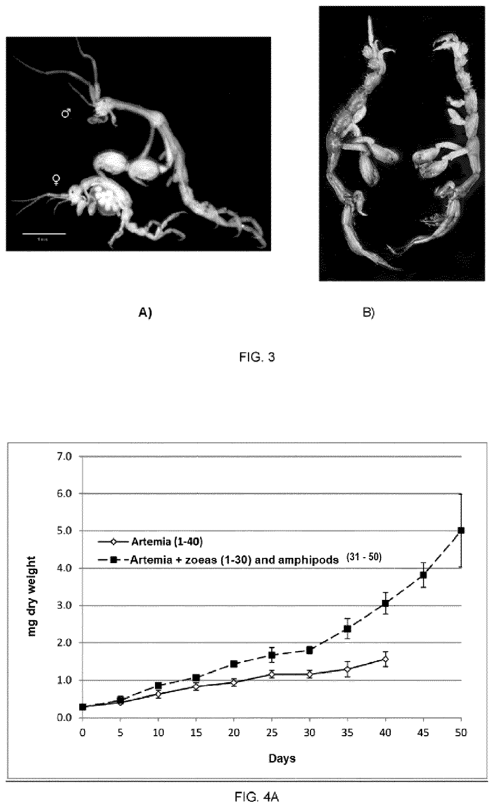

The food during the entire test (40 days) was based on *Artemia sp.,* fattened for 7 days with *Isochrysis aff. galbana* and supplied to the paralarvae with a density of 0.5 individuals/ml, distributing the doses such that there was always prey available in the tank which gave a range of between 1 to 4 doses/day. It was decided to close the tank at 40 days due to the growth rate (GI) not increasing more than 4% per day, being maintained between 1 and 1.5 mg dry weight (see Figure 4A). The survival at this age was from 65%.

### Example 3: Common octopus larval culture test (1000 I tank) using Artemia sp. and crab zoeas from day 1 to day 30 and with the amphipods of the present invention from day 31.

This test was carried out simultaneously with the previous test and using the same culture conditions with the aim of comparing the effect of the different prey. In this case, *Artemia sp.* was complemented with crab zoeas (0.1 individuals/ml) up to 30 days old (however, given the difficulty in obtaining the zoeas, these could only be added to the tank in 10 of the 30 first days, which reduced the expected growth). From then, they started to be supplied exclusively with amphipods. On the one hand, the gammarideas of the type *Jassa spp.* (preferably *J. falcata* and *J. marmorata*) which represented 95% of the total number of individuals and the caprelids of the types *Phtisica* spp. *and*/*or Caprella* spp. (preferably *Phtisica marina and Caprella equilibra*) which represented 5% of the total number of individuals. The gammarideas reached between 2 and 8 mm in length and the caprelids between 4 and 30 mm in length. In the case of the amphipods, the feeding protocol consisted in supplying 3 to 5 prey per paralarva/day, the doses being distributed such that there was always prey available in the tank which gave a range of between 1 to 4 doses/day (5^{th} difference with respect to the prior art).

From 55 days old, paralarvae were observed which exceeded 6 mg dry weight and which started to migrate to the bottom. These individuals were transferred to a new tank called settlement tank (Figure 5B) with 400 I volume, square, 50 cm in height, flat bottom, gray and covered with a shadowing net over ¾ of its surface. This tank was filled with water from the original tank and included refuges (1 to 2 cm PVC tubes) at the bottom of the tank or hanging cables vertically as well as small stones to enrich the habitat. The density of individuals was 0.1 paralarvae/l. At this point, it was seen that the paralarvae became vulnerable (at least temporarily) and can be attacked by the larger prey, therefore they were only fed with gammarideas of maximum 4 mm in length (6^{th} difference).

In this settlement tank, a renewal percentage similar to that of the initial tank was maintained from 30 days of age of the paralarvae, i.e. continuous renewal (24h) which renews approximately 200% of the total volume of the tank each day. The outlet of the water was carried out through a central tube with a net of 300 microns. With respect to the lighting, this was reduced in the initial tank to a range between 40 and 300 lux (69 to 517 W/m²) at the time where the first paralarvae were observed in pre-settlement (at 55 days and above 6 mg dry weight). Once transferred to the settlement tank, the intensity was maintained around 40 lux (69 W/m²) with the same photoperiod of the initial tank (14:10) (7^{th} difference).

In none of the tests described is the bottom of the tank siphoned of paralarvae. The objective is to reduce the stress on the paralarvae and also to allow the amphipods to colonizer the bottom of the tank since they are detritivores and help to keep the bottom clear of organic remains, preventing the proliferation of possible pathogens (8^{th} difference).

The amphipods (gammarideas and caprelids) were obtained from rafts and purifiers used in mussel culture of Galician rivers. They were kept in 1000 I tanks similar to those of Figure 5B (settlement tanks), but without covering and with 10 renewals of their volume per day. The food was based on fish feed and leftovers of mollusks *ad libitum.* In order to feed the paralarvae, the amphipods were captured by means of two systems. The larger amphipods were obtained by means of siphoning the walls and bottom of the tank and were concentrated in a net. The second collection system consisted in a concentrator using the outlet tube of the water from the tank itself where the prey are stored. A net of 500 microns was placed on the walls of this tube which allowed prey to enter and a net of 200 microns was placed at the bottom of the tube (outlet) which kept them inside the tube. Once the prey are in the interior part of the tube, this tube is removed from the tank and the prey are concentrated into a recipient before being added to the paralarvae tank by means of 1 to 2 I plastic jugs of (9^{th} difference).

The data of this test showed a survival greater than 90% at 40 days of life and around 65% at 60 days of life. The growth rate showed an increase in weight of between 5 and 6% per day, reaching 5 mg dry weight at 50 days old (Figure 4A) and subsequently obtaining paralarvae with dry weights greater than 9 mg between 65 and 75 days old.

### Example 4: Control test: common octopus larval culture (100 I tank), using Artemia sp., exclusively as prey from day 1 to day 25 of life of the paralarvae.

This test was carried out under the same culture test conditions described in the two previous examples, with the difference being that the volume of the tanks was 100 l instead of 1000 l and three replicas were used instead of just one. The test lasted 25 days. Like in example 2, a control treatment was used, only with *Artemia sp.,* fattened for 7 days with *Isochrysis aff. galbana.* The growth results of the paralarvae were similar to those of example 2 as can be observed in Figure 4B with the dry weight of around 1 mg at 25 days of life.

### Example 5: Common octopus larval culture test (100 I tank), using Artemia sp. from day 1 to day 8 and with the amphipods of the present invention between the days 9 and 25 of life.

This test was carried out in parallel and under the same culture conditions described in example 4 with the aim of comparing *Artemia sp.* with an experimental treatment using the same amphipods of the type *Jassa spp.* of example 3. The difference is that on this occasion, these amphipods started to be supplied from day 8 of life since this was when it was observed that the majority of larvae ingested this type of prey (the person skilled in the art can easily see this, observing the behavior of the paralarvae or carrying out the protocol explained in the following example in order to know when to start supply the prey). In this case, feeding during the first 8 days consisted only of *Artemia sp.* (the same type as example 4) and between 9 and 10 days they were fed with a mixture of *Artemia sp.* (75% of the total of individuals) and amphipods (25%) of the type *Jassa spp.* of between 1 and 3 mm in length. From 10 days, the larvae started to be fed exclusively with these amphipods under the same conditions as in example 3 (3 to 5 prey/paralarvae/day), until the cultivation was completed. The growth results of the paralarvae in this example were similar to those of example 3 as can be observed in Figure 4B with a growth rate of 6.7% and survival of 70% at 25 days.

### Example 6: Amphipod capture and ingestion test at different ages

In parallel to the rest of the experiments, a new experiment was carried out with the aim of determining with more accuracy the age at which the paralarvae are capable of capturing and ingesting the amphipods of the type *Jassa spp.* and if there could be differences between lays. With this aim, paralarvae obtained from two different females, which exhibited different initial weights at the time of hatching, were compared. The paralarvae from the first female weighed on average 0.24 mg dry weight, while the paralarvae from the second female had an average of 0.29 mg initial dry weight (both within the normal margins of weight of this species). Both groups of paralarvae were placed in separate 100 l tanks under the same culture conditions as in the previous examples 2 to 5 and at a density of 4 paralarvae per liter. In both cases, amphipods of the type *Jassa spp.* (20 to 30%) were supplied together with *Artemia sp.* (80 to 70%) from the first day of life at a density of 3 to 5 prey/paralarvae.

In both cases, it was observed that all the amphipods were captured. The paralarvae that had captured prey and kept it for 2 to 3 minutes were removed from the tank (including the prey) and they were observed under the microscope (40 times enlargement) to confirm that they had food in their digestive system. The technical details for this observation are found in Nande, M. et al (2017). Prey Capture, Ingestion, and Digestion Dynamics of Octopus vulgaris Paralarvae Fed Live Zooplankton. Frontiers in Physiology, 8, 573. In this example, it was observed that the recently hatched paralarvae of 0.24 mg dry weight attacked the prey from the first day of life, but the ingestion percentage was only 30%, consequently it could be considered too soon to supply said diet. In addition, the paralarvae with 0.29 mg dry weight exhibited an ingestion range of 80% from the first day of life which is considered suitable for starting to supply the amphipods of the type *Jassa spp.*

This test reveals that starting to feed using these amphipods can vary from one lay to the next and it is recommendable, although not necessary, to carry out a capture and ingestion test in parallel to optimize the start of feeding with this prey. However, these prey (amphipods) could start to be administered from the first day.

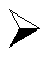 **Comparison of results between control experiments and those of the present invention.**

Upon comparing the results of the experiments based on the present invention with respect to those known in the prior art, the improvements are clearly significant for all the examples presented (2, 3, 4 and 5) and including tests both in 100 and 1000 l with the method of the present invention. The survival of the paralarvae in the method of the prior art at 30 days old (Garrido et al., 2017) is between 0.14 to 3.77% (the test had a total of 18 tanks), the experiments being completed at this age. In contrast, the conditions of the test in 1000 l tanks of the present invention with amphipods obtained a survival of more than 90% at 40 days and 65% at 60 days old. The culture conditions in 100 l tanks with amphipods in turn obtained a survival of more than 70% at 25 days old. It must also be pointed out that in the 1000 l test, the treatment with *Artemia sp.* in spite of having a suboptimal diet, exhibited a survival at 40 days of more than 65% which indicates that it is not only the use of amphipods that marks the difference, but that the culture protocol has also improved the survival. With respect to the weight, in the method of the prior art (Garrido et al., 2017), a growth rate with an increase of between 3.9 to 6.4% dry weight per day is obtained, but there are only values up to 15 days old, while the data of the method of the present invention for the tanks with amphipods, a similar increase to the maximums of the prior art (between 5 and 6% dry weight per day) is obtained for the 1000 l tanks and an increase of 6.5 and 7.5% dry weight per day for the 100 l tanks. In the case of the 1000 I tanks, settled larvae with weights greater than 9 mg dry weight between 65 and 75 days old were obtained. Figures 4A and 4B show the weight increase in the examples 2, 3, 4 and 5 with the method of the present invention. In this case, the differences between treatments with amphipods and with *Artemia* sp. can also be observed.

## Claims

1. A method for cultivating paralarvae of the common octopus, *Octopus vulgaris,* placed in a culture tank containing water, said method **characterized in that** it comprises the addition of prey selected from:
- gammarideas of the type *Jassa* spp.,
- caprelids of the types *Phtisica* spp. *and*/*or Caprella* spp. or
- combinations of these
to said culture tank.

2. The method according to claim 1, wherein the gammarideas of the type *Jassa* spp. are selected from *Jassa falcata* and *Jassa marmorata.*

3. The method according to any of the preceding claims, wherein the caprelids of the type *Phtisica* spp. *are Phtisica marina* and the caprelids of the type *Caprella* spp. are *Caprella equilibra.*

4. The method according to any of claims 1 to 3, wherein from day 1 of life to 20 to 30 days of life of the paralarvae, gammarideas of between 1 and 4 mm are added, from this moment and up to 50 to 70 days of life, gammarideas of between 2 and 8 mm in length and caprelids of between 4 and 30 mm in length are added, from 50 to 70 days and up to settlement of the paralarvae only gammarideas of between 1 and 4 mm in length are administered.

5. The method according to any of claims 1 to 3, wherein the gammarideas are added from a day between 1 and 10 days of life of the paralarvae up to settlement of the same, while the caprelids are added from 20 to 30 days of life and up to settlement of the same.

6. The method according to any of claims 1 to 3, wherein the gammarideas are added from the first day of life of the paralarvae up to their settlement and the caprelids are added from day 10 of life up to their settlement.

7. The method according to any of claims 1 to 3, wherein both the gammarideas and caprelids are added from day 30 of life of the paralarvae up to their settlement.

8. The method according to any of the preceding claims, wherein when combinations of gammarideas and caprelids are added, between 1 and 10% of caprelids are administered with respect to the total number of prey and between 90 and 99% of gammarideas with respect to the total number of prey.

9. The method according to claim 8, wherein 5% of caprelids and 95% of gammarideas are administered with respect to the total number of prey.

10. The method according to any of the preceding claims, wherein the density of paralarvae in the culture tank is between 3 and 7 paralarvae/liter.

11. The method according to any of the preceding claims, wherein a total of between 3 and 5 prey per paralarva per day are supplied to the culture tank.

12. The method according to any of the preceding claims, wherein the culture tanks used between the first day of life and up to 50 to 70 days of life have a truncated cone shape and are black and from 50 to 70 days, the paralarvae are transferred to another flat-bottomed, gray culture tank .

13. The method according to claim 12, wherein the density of paralarvae in the flat-bottomed, gray culture tank will be from 0.1 to 0.5 larvae per liter.

14. The method according to any of the preceding claims, wherein the culture tank is artificially illuminated by means of a light placed on the edge of the tank.

15. The method according to claim 14, wherein intensity levels of the light supplied vary between 1077 and 1436 W/m² for the first 10 to 15 days of life of the paralarvae; between 517 and 1077 W/m² from 10 to 15 days of life and up to 50 to 70 days of life, from this moment and up to settlement, the light is reduced to a range between 69 and 517 W/m².

16. The method according to any of the preceding claims, wherein the water in the culture tank is renewed as follows:
no renewal of the water of any kind is carried out in the tank during the two first days, renewal subsequently starts at a flowrate of between 4 and 10% of the total volume of the tank each hour such that 20% is renewed daily for the first 5 days and from there it increases up to 100% daily at 10 to 15 days, this renewal is maintained at 100% up to 30 days and from there, the renewal is left open permanently 24 hours per day which represents a daily renewal of 200% approximately, this renewal percentage is maintained until the paralarvae are settled.

17. The method according to any of the preceding claims, wherein a mixture of microalgae *Isochrysis* spp. and *Nannochloropsis* spp. is also added to the tank until a concentration of the same of between 0.7 and 1.5 x 10⁶cls/mL is obtained at the time of said addition.

18. The method according to claim 17, wherein the mixture of microalgae is added once per day.

19. The method according to any of the preceding claims, **characterized in that** the oxygen concentration in the water of the culture tank is greater than 5.5 mg/l.

20. The method according to any of the preceding claims, **characterized in that** the salinity of the water in the culture tank is from 35 to 36 g/l.

21. The method according to any of the preceding claims, **characterized in that** the temperature of the water in the culture tank is between 18 and 22°C.

22. The method according to any of the preceding claims, wherein the bottom of the culture tank is maintained without siphoning.

23. The method according to any of the preceding claims 1 to 21 wherein the prey are added to the culture tank from a storage tank of the same by means of siphoning the walls and bottom of the storage tank of the prey or by means of a concentrator using the outlet tube of the water of the cultivation itself such that a net is placed on said tube which allows prey to enter and a smaller net is placed at the bottom of the tube (which keeps them inside the tube) and once the prey are in the interior part of the tube, this tube is removed and the prey are transferred to a recipient in order to add them to the paralarvae tank.

## Patentansprüche

1. Verfahren zur Züchtung von Paralarven der gewöhnlichen Krake, *Octopus vulgaris,* eingebracht in ein Wasser enthaltendes Zuchtbecken, wobei das genannte Verfahren **dadurch gekennzeichnet ist, dass** es die Zugabe von Futtertieren, ausgewählt aus:
- Gammariden der Art *Jassa* spp.,
- Caprelliden der Arten *Phtisica* spp. *und*/*oder Caprella* spp. oder
- Kombinationen hiervon
in das genannte Zuchtbecken umfasst.

2. Verfahren nach Anspruch 1, wobei die Gammariden der Art *Jassa* spp. ausgewählt sind aus *Jassa falcata* und *Jassa marmorata.*

3. Verfahren nach einem der vorstehenden Ansprüche, wobei die Caprelliden der Art *Phtisica* spp. *Phtisica marina* und die Caprelliden der Art *Caprella* spp. *Caprella equilibra* sind.

4. Verfahren nach einem der Ansprüche 1 bis 3, wobei ab dem 1. Lebenstag bis zum 20. bis 30. Lebenstag der Paralarven 1 bis 4 mm lange Gammariden zugegeben werden, ab diesem Zeitpunkt und bis zum 50. bis 70. Lebenstag 2 bis 8 mm lange Gammariden und 4 bis 30 mm lange Caprelliden zugegeben werden, ab dem 50. bis 70. Lebenstag und bis zur Stabilisierung der Paralarven nur 1 bis 4 mm lange Gammariden verfüttert werden.

5. Verfahren nach einem der Ansprüche 1 bis 3, wobei die Gammariden ab einem Tag zwischen dem 1. und 10. Lebenstag der Paralarven bis zur Stabilisierung derselben zugegeben werden, während die Caprelliden ab dem 20. bis 30. Lebenstag und bis zur Stabilisierung derselben zugegeben werden.

6. Verfahren nach einem der Ansprüche 1 bis 3, wobei die Gammariden ab dem ersten Lebenstag der Paralarven bis zu ihrer Stabilisierung und die Caprelliden ab dem 10. Lebenstag bis zu ihrer Stabilisierung zugegeben werden.

7. Verfahren nach einem der Ansprüche 1 bis 3, wobei sowohl die Gammariden als auch die Caprelliden ab dem 30. Lebenstag bis zu ihrer Stabilisierung zugegeben werden.

8. Verfahren nach einem der vorstehenden Ansprüche, wobei bei der Zugabe von Kombinationen aus Gammariden und Caprelliden zwischen 1 und 10 % der Gesamtmenge der Futtertiere Caprelliden und zwischen 90 und 99 % der Gesamtmenge der Futtertiere Gammariden sind.

9. Verfahren nach Anspruch 8, wobei aus der Gesamtmenge der Futtertiere 5 % Caprelliden und 95 % Gammariden verfüttert werden.

10. Verfahren nach einem der vorstehenden Ansprüche, wobei die Besatzdichte der Paralarven im Zuchtbecken zwischen 3 und 7 Paralarven/Liter liegt.

11. Verfahren nach einem der vorstehenden Ansprüche, wobei dem Zuchtbecken insgesamt zwischen 3 und 5 Futtertiere pro Paralarve und Tag zugeführt werden.

12. Verfahren nach einem der vorstehenden Ansprüche, wobei die zwischen dem ersten Lebenstag und bis zum 50. bis 70. Lebenstag verwendeten Zuchtbecken kegelstumpfförmig und schwarz sind und die Paralarven ab dem 50. bis 70. Lebenstag in ein graues Zuchtbecken mit flachem Boden umgesiedelt werden.

13. Verfahren nach Anspruch 12, wobei die Besatzdichte der Paralarven in dem grauen Zuchtbecken mit flachem Boden 0,1 bis 0,5 Larven pro Liter beträgt.

14. Verfahren nach einem der vorstehenden Ansprüche, wobei das Zuchtbecken mittels einer am Rand des Beckens platzierten Lichtquelle künstlich beleuchtet wird.

15. Verfahren nach Anspruch 14, wobei die Stärke der Lichtbestrahlung in den ersten 10 bis 15 Lebenstagen der Paralarven zwischen 1077 und 1436 W/m² und ab dem 10. bis 15. Lebenstag sowie bis zum 50. bis 70. Lebenstag zwischen 517 und 1077 W/m² variiert und ab diesem Zeitpunkt bis zur Stabilisierung das Licht auf einen Bereich zwischen 69 und 517 W/m² reduziert wird.

16. Verfahren nach einem der vorstehenden Ansprüche, wobei das Wasser im Zuchtbecken wie folgt erneuert wird:
In den ersten beiden Tagen erfolgt keinerlei Austausch des Wassers im Becken, danach beginnt der Austausch mit einer Durchflussmenge von 4 bis 10 % des Gesamtvolumens des Beckens pro Stunde, sodass in den ersten 5 Tagen täglich 20 % ausgetauscht werden, was anschließend an 10 bis 15 Tagen auf bis zu 100 % täglich erhöht wird; dieser Austausch von 100 % wird bis zu 30 Tagen beibehalten; ab dann erfolgt ein permanent laufender Austausch während 24 Stunden am Tag, was einem täglichen Austausch von etwa 200 % entspricht; dieser Austauschprozentsatz wird beibehalten, bis die Paralarven stabilisiert sind.

17. Verfahren nach einem der vorstehenden Ansprüche, wobei auch die Zugabe eines Gemischs aus Mikroalgen *Isochrysis* spp. und *Nannochloropsis* spp. in das Becken erfolgt, bis zum Zeitpunkt der genannten Zugabe eine Konzentration derselben von 0,7 bis 1.5 x 10⁶cls/mL erreicht ist.

18. Verfahren nach Anspruch 17, wobei das Gemisch aus Mikroalgen einmal täglich zugegeben wird.

19. Verfahren nach einem der vorstehenden Ansprüche, **dadurch gekennzeichnet, dass** die Sauerstoffkonzentration im Wasser des Zuchtbeckens höher als 5,5 mg/l ist.

20. Verfahren nach einem der vorstehenden Ansprüche, **dadurch gekennzeichnet, dass** der Salzgehalt des Wassers im Zuchtbecken 35 bis 36 g/l beträgt.

21. Verfahren nach einem der vorstehenden Ansprüche, **dadurch gekennzeichnet, dass** die Temperatur des Wassers im Zuchtbecken zwischen 18 und 22 °C liegt.

22. Verfahren nach einem der vorstehenden Ansprüche, wobei der Boden des Zuchtbeckens ohne Absaugen gewartet wird.

23. Verfahren nach einem der vorstehenden Ansprüche 1 bis 21, bei dem die Futtertiere dem Zuchtbecken aus einem Vorratsbehälter desselben zugeführt werden, indem die Futtertiere von Wänden und Boden des Vorratsbehälters abgesaugt werden oder ein Sammler unter Verwendung des Wasserauslassrohrs des eigentlichen Zuchtbeckens zum Einsatz kommt, wobei auf dem genannten Rohr ein Netz, das den Eintritt von Futtertieren ermöglicht, platziert wird, und ein kleineres Netz (das sie im Inneren des Rohrs hält) an der Unterseite des Rohrs platziert wird, und sobald die Futtertiere im Inneren des Rohrs sind, das Rohr entfernt und die Futtertiere zwecks Zugabe in den Paralarventank in ein Gefäß umgefüllt werden.

## Revendications

1. Procédé pour cultiver des paralarves de la pieuvre commune, *Octopus vulgaris,* placées dans un réservoir de culture contenant de l'eau, ledit procédé étant **caractérisé en ce qu'il** comprend l'addition de proies choisies parmi :
- des gammarides du type *Jassa* spp,
- des caprelidés de type *Phtisica* spp. *et*/*ou Caprella* spp. ou
- des combinaisons de ces types
dans ledit bac de culture.

2. Procédé selon la revendication 1, dans lequel les gammarides du type *Jassa* spp. sont choisis parmi *Jassa falcata* et *Jassa marmorata.*

3. Procédé selon l'une quelconque des revendications précédentes, dans lequel les caprelidés de type *Phtisica* spp. *sont Phtisica marina* et les caprelidés du type *Caprella* spp. sont *Caprella equilibra.*

4. Procédé selon l'une quelconque des revendications 1 à 3, dans lequel à partir du premier jour de vie jusqu'à 20 à 30 jours de vie des paralarves, on ajoute des gammarides d'une longueur comprise entre 1 et 4 mm, à partir de ce moment et jusqu'à 50 à 70 jours de vie, on ajoute des gammarides d'une longueur comprise entre 2 et 8 mm et des caprelides d'une longueur comprise entre 4 et 30 mm, de 50 à 70 jours et jusqu'à la fixation des paralarves, on administre uniquement des gammarides d'une longueur comprise entre 1 et 4 mm.

5. Procédé selon l'une quelconque des revendications 1 à 3, dans lequel les gammarides sont ajoutés à partir d'un jour compris entre 1 et 10 jours de vie des paralarves jusqu'à la fixation de celles-ci, tandis que les caprélidés sont ajoutés à partir de 20 à 30 jours de vie et jusqu'à la fixation de celles-ci.

6. Procédé selon l'une quelconque des revendications 1 à 3, dans lequel les gammarides sont ajoutés à partir du premier jour de vie des paralarves jusqu'à leur installation et les caprélidés sont ajoutés à partir du dixième jour de vie jusqu'à leur installation.

7. Procédé selon l'une quelconque des revendications 1 à 3, dans lequel les gammarides et les capridés sont ajoutés à partir du 30ème jour de vie des paralarves jusqu'à leur installation.

8. Procédé selon l'une quelconque des revendications précédentes, dans lequel, lorsque des combinaisons de gammarides et de capridés sont ajoutées, on administre entre 1 et 10% de capridés par rapport au nombre total de proies et entre 90 et 99% de gammarides par rapport au nombre total de proies.

9. Procédé selon la revendication 8, dans laquelle 5% des capridés et 95% des gammarides sont administrés par rapport au nombre total de proies.

10. Procédé selon l'une quelconque des revendications précédentes, dans lequel la densité de paralarves dans le bac de culture est comprise entre 3 et 7 paralarves/litre.

11. Procédé selon l'une quelconque des revendications précédentes, dans lequel un total de 3 à 5 proies par paralarva par jour sont fournies au bac de culture.

12. Procédé selon l'une quelconque des revendications précédentes, dans lequel les bacs de culture utilisés entre le premier jour de vie et jusqu'à 50 à 70 jours de vie ont une forme tronconique et sont noirs et de 50 à 70 jours, les paralarves sont transférées dans un autre bac de culture gris à fond plat.

13. Procédé selon la revendication 12, dans lequel la densité des paralarves dans le réservoir de culture gris à fond plat sera de 0,1 à 0,5 larve par litre.

14. Procédé selon l'une quelconque des revendications précédentes, dans lequel la cuve de culture est éclairée artificiellement au moyen d'une lumière placée sur le bord de la cuve.

15. Procédé selon la revendication 14, dans lequel les niveaux d'intensité de la lumière fournie varient entre 1077 et 1436 W/m² pendant les 10 à 15 premiers jours de vie des paralarves ; entre 517 et 1077 W/m² de 10 à 15 jours de vie et jusqu'à 50 à 70 jours de vie, à partir de ce moment et jusqu'à l'installation, la lumière est réduite à une plage comprise entre 69 et 517 W/m².

16. Procédé selon l'une quelconque des revendications précédentes, dans lequel l'eau du bac de culture est renouvelée de la manière suivante :
aucun renouvellement de l'eau de quelque nature que ce soit n'est effectué dans la cuve pendant les deux premiers jours, le renouvellement commence ensuite à un débit compris entre 4 et 10% du volume total de la cuve par heure de sorte que 20% sont renouvelés quotidiennement pendant les 5 premiers jours et de là, il augmente jusqu'à 100% quotidiennement entre 10 et 15 jours, ce renouvellement est maintenu à 100% jusqu'à 30 jours et de là, le renouvellement est laissé ouvert en permanence 24 heures par jour ce qui représente un renouvellement quotidien de 200% environ, ce pourcentage de renouvellement est maintenu jusqu'à ce que les paralarves soient installées.

17. Procédé selon l'une quelconque des revendications précédentes, dans lequel on ajoute également au réservoir un mélange de microalgues *Isochrysis* spp. et *Nannochloropsis* spp. jusqu'à obtenir une concentration de celles-ci comprise entre 0,7 et 1,5 x 10⁶cls/mL au moment dudit ajout.

18. Procédé selon la revendication 17, dans lequel le mélange de microalgues est ajouté une fois par jour.

19. Procédé selon l'une quelconque des revendications précédentes, **caractérisé en ce que** la concentration en oxygène dans l'eau du bac de culture est supérieure à 5,5 mg/l.

20. Procédé selon l'une quelconque des revendications précédentes, **caractérisé en ce que** la salinité de l'eau du bac de culture est comprise entre 35 et 36 g/l.

21. Procédé selon l'une quelconque des revendications précédentes, **caractérisé en ce que** la température de l'eau dans le bac de culture est comprise entre 18 et 22°C.

22. Procédé selon l'une quelconque des revendications précédentes, dans lequel le fond de la cuve de culture est maintenu sans siphonage.

23. Procédé selon l'une quelconque des revendications précédentes 1 à 21, dans lequel les proies sont ajoutées au réservoir de culture à partir d'un réservoir de stockage de celui-ci au moyen d'un siphonnage des parois et du fond du réservoir de stockage des proies ou au moyen d'un concentrateur utilisant le tube de sortie de l'eau de la culture elle-même de telle sorte qu'un filet est placé sur ledit tube qui permet aux proies d'entrer et un filet plus petit est placé au fond du tube (qui les maintient à l'intérieur du tube) et une fois que les proies sont dans la partie intérieure du tube, ce tube est retiré et les proies sont transférées dans un récipient afin de les ajouter au réservoir des paralarves.
